# EUROPEAN PATENT SPECIFICATION

(11) **EP 2 924 310 B1**
(45) Date of publication and mention of the grant of the patent: **02.05.2018**
(21) Application number: 13857203.7
(22) Date of filing: 19.11.2013
(51) Int. Cl.: F16D 13/71, F16D 13/58

(54) **CLUTCH COVER ASSEMBLY**
KUPPLUNGSDECKELANORDNUNG
ENSEMBLE DE COUVERCLE D'EMBRAYAGE

(30) Priority: 21.11.2012 JP 2012255660
(43) Date of publication of application: 30.09.2015
(73) Proprietor: Aisin Seiki Kabushiki Kaisha, Kariya-shi Aichi 448-8650 (JP)
(72) Inventor: HAYASHI, Daisuke, Kariya-shi Aichi 448-8650 (JP); SHINODA, Morio, Kariya-shi Aichi 448-8650 (JP)
(74) Representative: Kramer Barske Schmidtchen Patentanwälte PartG mbB
(86) International application number: PCT/JP2013/081213
(87) International publication number: WO 2014/080921

(56) References cited:
- EP-A2- 1 657 461
- EP-A2- 2 428 694
- DE-A1- 1 475 407
- DE-A1- 3 433 644
- DE-A1-102004 012 956
- JP-A- 2012 062 913
- JP-B2- H 063 226
- JP-U- S 511 645
- JP-U- S6 129 136
- JP-U- S62 134 934

## Description

### TECHNICAL FIELD

An embodiment of the present invention relates to a clutch cover assembly.

### BACKGROUND ART

Conventionally, a clutch cover assembly in which a cover and a diaphragm spring are connected via a ring member is known (e.g., Patent reference 1). According to the clutch cover assembly described in the Patent reference 1, a projection portion provided at a cover is bent to hold the ring member held by the diaphragm spring in a state where the projection portion enfolds the ring member from an inner side in a radial direction.

### DOCUMENT OF KNOWN ART

### PATENT DOCUMENT

Patent document 1: JP2012-62913A

### OVERVIEW OF INVENTION

### PROBLEM TO BE SOLVED BY INVENTION

However, according to the conventional clutch cover assembly, for example, because of its construction, there are cases that it is difficult to increase the length of the projection portion that is to be bent. In that case, for example, there are cases that drawbacks such as difficulty in assembling occur. Document EP2428694 A2 discloses a clutch cover assembly according to the preamble of claim 1.

### MEANS FOR SOLVING PROBLEM

A clutch cover assembly according to an embodiment of the present invention, for example, is disclosed in claim 1. According to the clutch cover assembly, for example, both of the cover and the diaphragm spring include the wall portions that faces the ring member at the sides except the outer side in the radial direction, that is, at the one side in the axial direction, at the other side in the axial direction, and at the inner side in the radial direction. Thus, according to the embodiment, for example, a construction in which the cover and the diaphragm spring are connected via the ring member is likely to be relatively readily obtained. For example, the ring member is likely to be restrained from being disengaged outwardly in the radial direction.

Further developments are given in the dependent claims.

According to the clutch cover assembly described above, for example, the cover includes a hooked portion including the second wall portion and the third wall portion;
the cover is provided with a third opening portion; and the hooked portion and the protruding portion protrude from a rim portion of the third opening portion. Accordingly, for example, the hooked portion and the protruding portion are likely to be relatively readily obtained by machining of the third opening portion.

According to the clutch cover assembly described above, for example, the protruding portion is bent in the axial direction. Accordingly, for example, the position of the projection in the radial direction is unlikely changed by the bend of the protruding portion. Thus, for example, the precision of the position of the protruding portion is likely to be enhanced.

According to the clutch cover assembly described above, for example, the cover includes hooked portions including the second wall portion and the third wall portion; and at least one of the hooked portions is provided adjacent to the sixth wall portion. Thus, for example, the cover and the diaphragm spring are unlikely to be displaced from one another in the axial direction.

According to the clutch cover assembly described above, for example, the sixth wall portion is provided at a portion at one side or the other side of the lever portion in the circumferential direction. The clutch cover assembly includes the lever portion being provided with the sixth wall portion on a portion at the one side in the circumferential direction, and the lever portion being provided with the sixth wall portion on a portion at the other side in the circumferential direction. Thus, for example, the force affecting the ring member in the circumferential direction is reduced, and compared to a case where the lever portion on which the sixth wall portion is provided at the one side in the circumferential direction only is provided, the force affecting the ring member in the circumferential direction is likely to be reduced.

According to the clutch cover assembly described above, for example, at least one of the hooked portions is caught between two of the sixth wall portions in a state where being adjacent to the ring member in a circumferential direction. Thus, for example, compared to a case where the sixth wall portion is adjacent only to the one side of the hooked portion in the circumferential direction, the cover and the diaphragm spring are likely to be restrained from tilting.

According to the clutch cover assembly described above, for example, two of the sixth portions that are adjacent to the hooked portion are provided at the separate lever portions, respectively. Thus, for example, using a gap between two levers, the hooked portion is likely to be arranged more readily.

According to the clutch cover assembly described above, for example, the cover includes the hooked portion being adjacent to two of the sixth wall portions and a second protruding portion including the second wall portion that is separated from the sixth wall portion, and the hooked portion and the second protruding portion are positioned at shifted positions in a circumferential direction of the ring member. Thus, for example, compared to a case where the second protruding portion is not provided, the configuration of the ring member can be maintained with higher precision.

According to the clutch cover assembly described above, for example, a clutch cover assembly includes a ring member; a cover member including a first support portion supporting one side of the ring member in an axial direction and a second support portion linked to the first support portion at least via a first portion which is positioned at an inner side of the ring member in a radial direction, the second support portion supporting the other side of the ring member in the axial direction, the cover member being provided with a first opening portion having a circular configuration at a center portion thereof; and a diaphragm spring including an annular base portion, a lever portion extending inwardly from the base portion in the radial direction, a third support portion supporting the other side of the ring ember in the axial direction and clamping the ring member between the first support portion and the third support portion, and a fourth support portion linked to the third support portion at least via a second portion positioned at the inner side of the ring member in the radial direction, the fourth support portion supporting the one side of the ring member in the axial direction and clamping the ring member between the second support portion and the fourth support portion, the diaphragm spring being provided with a second opening portion at a tip end side of the lever. That is, according to the clutch cover assembly, for example, in both of the cover and the diaphragm spring, the portion which supports the one side of the ring member in the axial direction and the portion which supports the other side in the axial direction are connected at an inner side in the radial direction. Thus, according to the embodiment, for example, a construction in which the cover and the diaphragm spring are connected via the ring member is likely to be obtained relatively readily.

### BRIEF DESCRIPTION OF DRAWINGS

[Fig. 1] Fig. 1 is a perspective view of an example of a clutch cover assembly according to an embodiment.
[Fig. 2] Fig. 2 is a plane view, which is viewed from one side in an axial direction, of the example of the clutch cover assembly according to the embodiment.
[Fig. 3] Fig. 3 is a perspective view of a cover included in the example of the clutch cover assembly according to the embodiment.
[Fig. 4] Fig. 4 is a perspective view of a diaphragm ring included in the example of the clutch cover assembly according to the embodiment.
[Fig. 5] Fig. 5 is a cross-sectional view taken on line V-V in Fig. 2.
[Fig. 6] Fig. 6 is a cross-sectional view taken on line VI-VI in Fig. 2.
[Fig. 7] Fig. 7 is a cross-sectional view taken on line VII-VII in Fig. 2.
[Fig. 8] Fig. 8 is a perspective view, which is viewed from a radially outward, of a part of the example of the clutch cover assembly according to the embodiment.
[Fig. 9] Fig. 9 is a perspective view, which is viewed from the other side in the axial direction, of an assembled state of the ring member and cover included in the example of the clutch cover assembly according to the embodiment.
[Fig. 10] Fig. 10 is a perspective view, which is viewed from one side in the axial direction, of an assembled state of the ring member and the diaphragm ring included in the example of the clutch cover assembly according to the embodiment.
[Fig. 11] Fig. 11 is a view which shows a state before the ring member is assembled in the cross-section shown in Fig. 5.
[Fig. 12] Fig. 12 is a cross-sectional view of a clutch cover assembly according to a first modified example at the position equivalent to the position in Fig. 7.

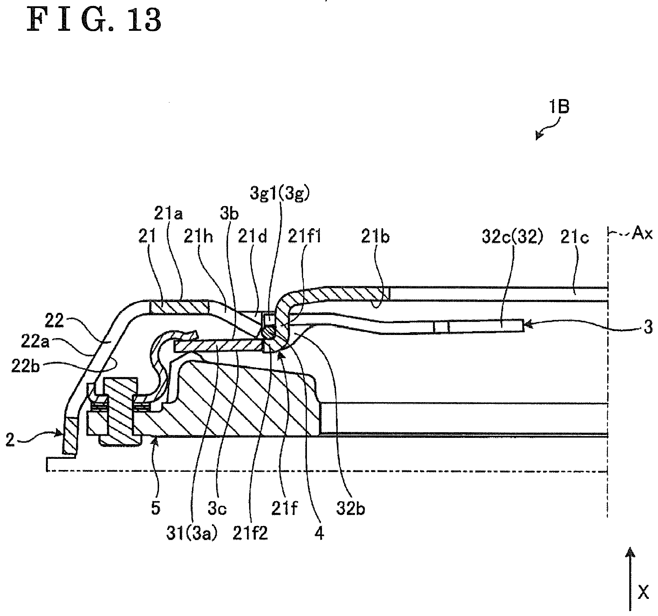

[Fig. 13] Fig. 13 is a cross-sectional view of a clutch cover assembly according to a second modified example at the position equivalent to the position in Fig. 5.

### MODE FOR CARRYING OUT THE INVENTION

Constructions similar to one another are included in the embodiment and modified examples. Common numerals are provided for those similar constructions, and redundant explanations will be omitted.

A clutch (a dry-type single plate clutch, not shown) that includes a clutch cover assembly 1 is positioned between an engine (a power plant, not shown) and a transmission (gearbox, not shown), for example, and the clutch changes transition states of a driving force (rotation) from the engine to the transmission. For example, the clutch cover assembly 1 is attached to a flywheel (not shown) at a rear of the engine to cover a pressure plate 5 and a clutch disc (not shown), for example.

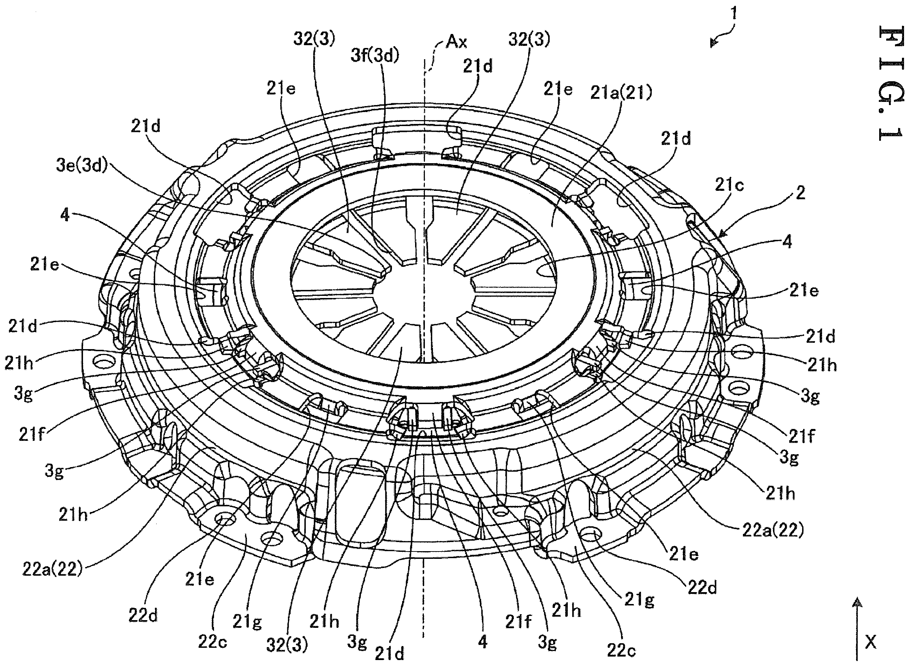

A center axis Ax of the clutch cover assembly 1 corresponds to a center axis of a rotation member and a rotary configuration (e.g., an opening portion 21c, a component a ring member 4 or the like, a member, and configuration) included in the clutch cover assembly 1. The center axis Ax substantially accords to an center axis (rotation center) of a shaft (not shown) that penetrates through the clutch cover assembly 1. In those circumstances, according to the explanations below, unless otherwise described, an axial direction indicates an axial direction of the center axis Ax, a radial direction indicates a radial direction of the center axis Ax, and a circumferential direction indicates a circumferential direction of the center axis Ax. Further, according to the detail explanations hereunder, a transmission side in an axial direction (upper side in Fig. 1) is defined as one side in the axial direction, and an engine side in the axial direction (lower side in Fig. 1) is defined as the other side in the axial direction. One side in the axial direction is indicated with an arrow X in each of drawings.

According to the embodiment, for example, the clutch cover assembly 1 includes a cover 2, a diaphragm spring 3, and a ring member 4.

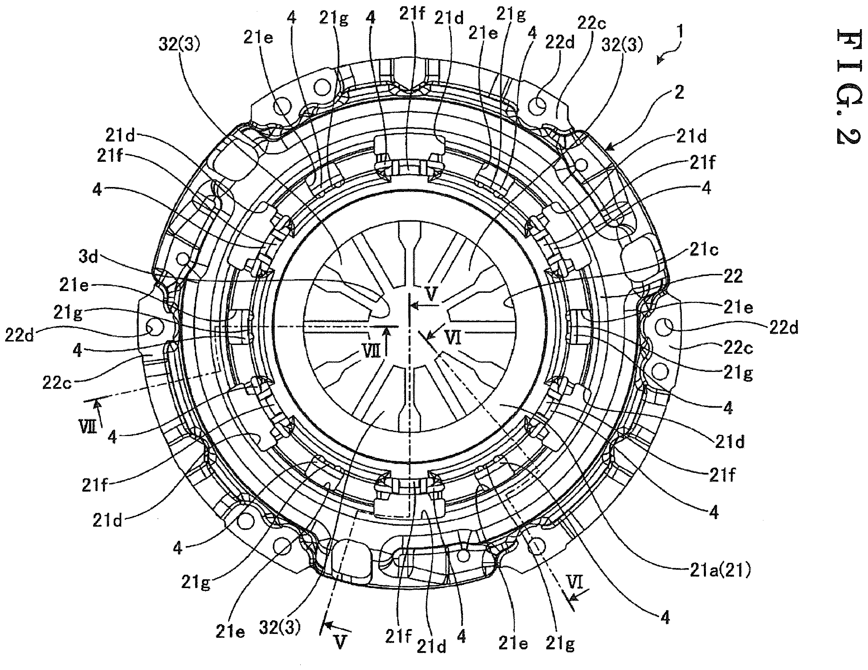

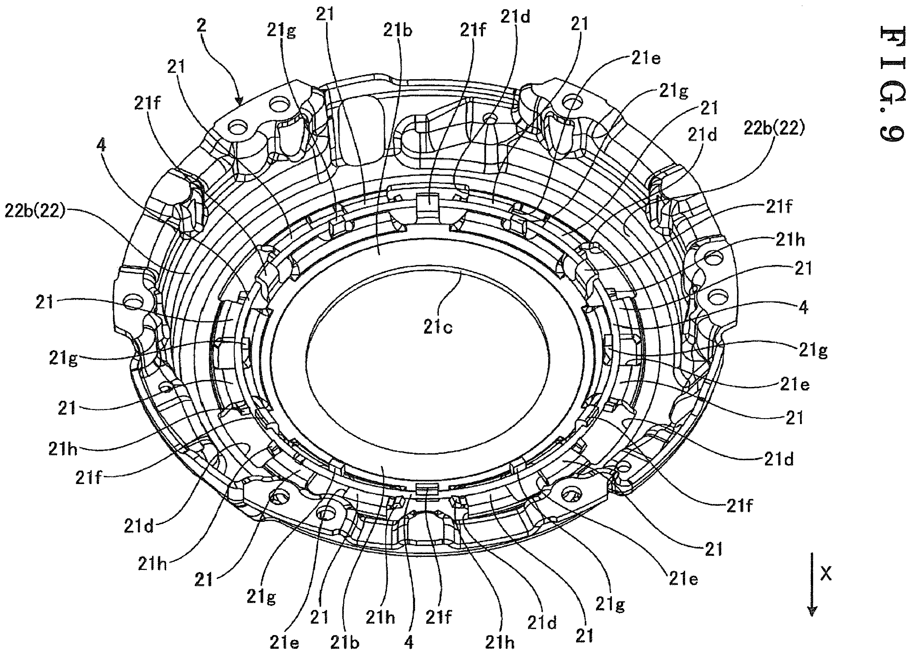

According to the embodiment, the cover 2 includes a wall portion 21 (end wall, top wall, a bottom wall, a flange portion, inwardly facing flange portion) and a wall portion 22 (circumferential wall, side wall, cylindrical portion) as shown in Figs. 1-3, for example. The wall portion 21 is structured in a ring shape and in a plate shape. The wall portion 21 includes a surface 21a which is directed to the one side in the axial direction and a surface 21b which is opposite from the surface 21a and is directed to the other side in the axial direction (see Fig. 9). A circular shaped opening portion 21c (first opening portion, penetration hole) is provided in a center portion of the wall portion 21. Further, plural opening portions 21d, 21e are provided at a circumference of the opening portion 21c (outer circumference side, radially outward) of the wall portion 21, the plural opening portions 21d, 21e are substantially equally spaced (e.g., thirty degrees according to the embodiment) in a circumferential direction. The opening portions 21d, 21e are used for cutting and bending projections 21f, 21g, 21h (projection portion, a hooked portion, a catching portion, a claw portion, a hook). That is, the projections 21f, 21g, 21h protrude from a rim portion of the opening portions 21d, 21e. The projections 21f, 21g, 21h are applied to support the ring member 4 and to restrain the ring member 4 from moving.

The wall portion 22 is cylindrically structured. The wall portion 22 is connected to an end portion of the wall portion 21 at a radially outward side (outer peripheral side) of the wall portion 21. The wall portion 22 includes a surface 22a directed to the outside in a radial direction and a surface 22b which is opposite from the surface 22a and directed to the inner side in the radial direction (see Fig. 9). A flange portion 22c (attaching portion, overhanging portion, wall portion) that overhangs the wall portion 22 at the side opposite from the side which is connected to the wall portion 21, the flange portion 22c overhanging in a radially outward direction. The flange portion 22c is provided with opening portions 22d (e.g., penetration holes according to the embodiment) used for connecting (joining, fixing) the flange portion 22c to a flywheel (not shown). Connecting means (e.g., screw) is positioned through the opening portion 22d. The cover 2 is made from a metal material.

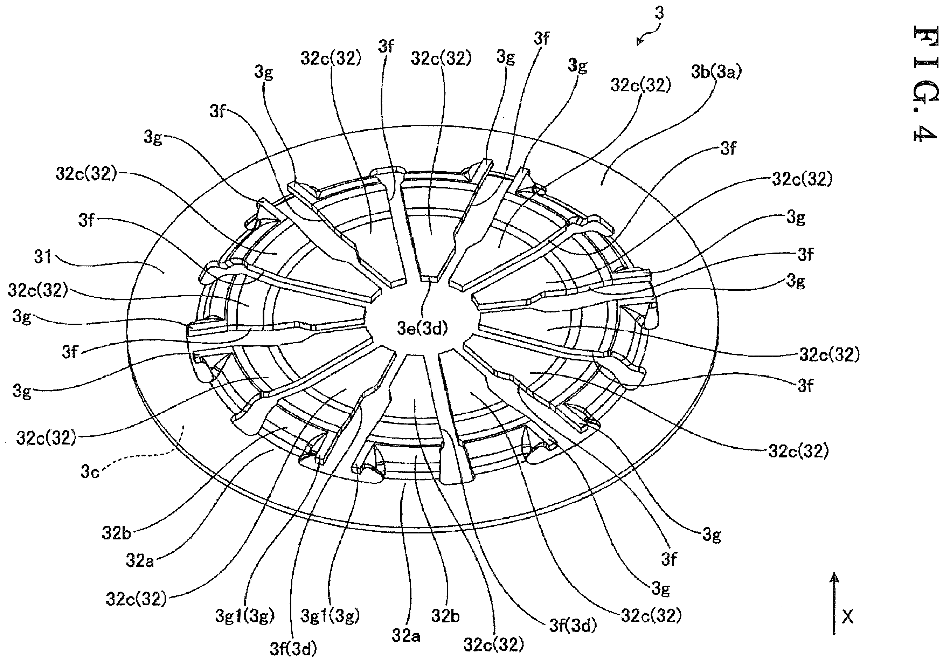

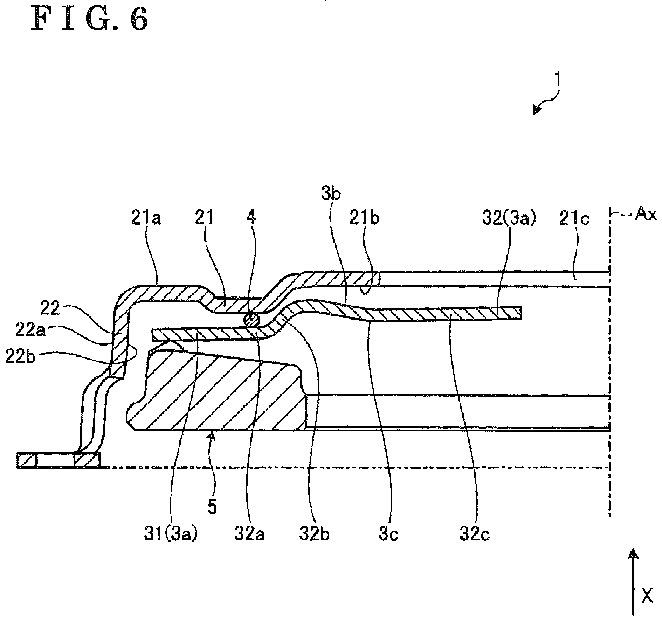

As shown in Fig. 4, for example according to the embodiment, the diaphragm spring 3 is constructed in a disc plate shape. A wall portion 3a of the diaphragm spring 3 includes a surface 3b which is directed to the one side in the axial direction and a surface 3c which is opposite from the surface 3b and is directed to the other side in the axial direction. An opening portion 3d (second opening portion) is provided at a center portion of the diaphragm spring 3. The opening portion 3d includes a circular portion 3e positioned in the center portion and a slit portion 3f radially extending (cut into, cutout) from the circular portion 3e. According to the embodiment, for example, a portion which is formed in a ring shape and plate shape at the outward of the opening portion 3d (slit portion 3f) in the radial direction corresponds to a base portion 31 (flange portion). Further, an elongated triangular portion which is pointed toward radially inner side and is positioned between two adjacent slit portions 3f in a circumferential direction serves as a lever portion 32. That is, the lever portion 32 protrudes from the base portion 31 towards the inner side in the radial direction. According to the embodiment, the lever portion 32 includes wall portions 32a, 32b, 32c, for example. The wall portion 32a is disposed at a position closest to the base of the lever portion 32 and is continues from the base portion 31. The wall portion 32b is connected to the wall portion 32a and extends obliquely from the wall portion 32a in a radially inward direction and towards the one side in the axial direction. The wall portion 32c is connected to the wall portion 32b and extends from the wall portion 32b towards a radially inner side. As shown in Fig. 6, the wall portion 32a and the wall portion 32c are disposed at shifted positions in the axial direction.

The lever portions 32 are provided with projections 3g, respectively. The projection 3g protrudes outwardly in a radial direction along a rim of the slit portion 3f, the projection 3g protruding from the outside in a radial direction and in a circumference direction at one side or the other side of the wall portion 32c. The projection 3g protrudes in a rod manner in a direction which substantially continues from the wall portion 32c. Further, according to the embodiment, for example, the projection 3g is provided at only one of end portions at one side or at the other side in a circumferential direction (end portion of both sides in a width direction) of each of the lever portions 32. Further, according to the embodiment, for example, the lever portion 32 in which the projection 3g is provided at the one side in the circumferential direction and the lever portion 32 in which the projection 3g is provided at the other side in the circumferential direction are arranged alternately in the circumferential direction. Accordingly, as shown in Fig. 4, according to the diaphragm spring 3, the slit portion 3f at which the projection 3g of one of the lever portions 32 and the projection 3g of the adjacent lever portion 32 face each other keeping a distance in the circumferential direction and the slit portion 3f at which the projection 3f is not provided are arranged alternately in the circumferential direction. The projection 3g is used to support the ring member 4 and to restrain the ring member 4 from moving. The diaphragm spring 3 is made from a metal material.

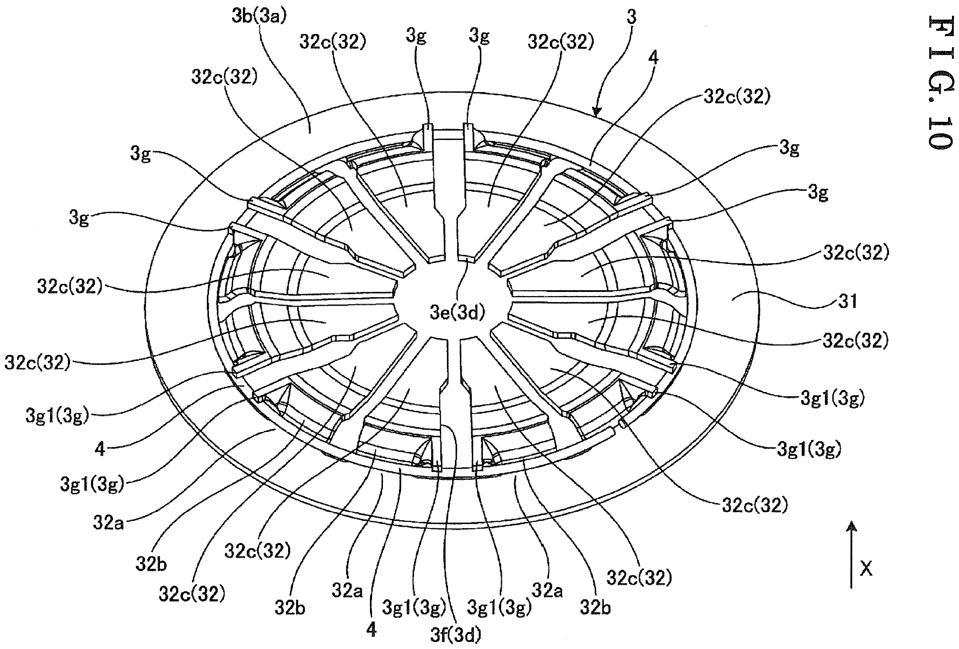

According to the embodiment, for example, as shown in Figs. 9 and 10, the ring member 4 is structured by curving a wire which is made from a metal material and includes a circular shape in cross-section in a ring shape. That is, the ring member 4 corresponds to an example of a C-ring in which end portions in a longitudinal direction (circumferential direction) come to close to each other.

The cover 2 and the diaphragm spring 3 are connected via the ring member 4. The diaphragm spring 3 is supported at the cover 2 to be able to move in a rocking manner (rotatable, displaceable, deformable) with the ring member 4 as a fulcrum.

The ring member 4 is supported at the diaphragm spring 3 as well as supported at the cover 2. A support position of the ring member 4 by the cover 2 and a support position of the ring member 4 by the diaphragm spring 3 are different (are at shifted positions) in the circumferential direction of the ring member 4.

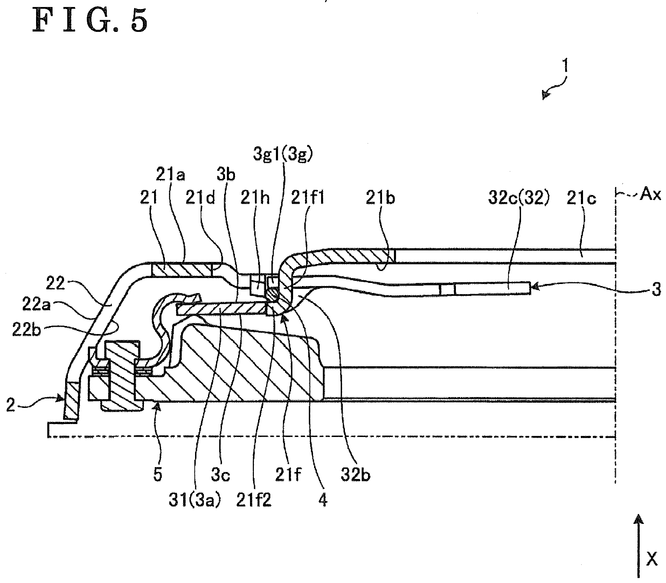

According to the embodiment, for example, as shown in Fig. 9, the ring member 4 is positioned at the surface 21b side of the cover 2 (the other side in the axial direction, reverse side) and is supported along the surface 21b. The ring member 4 is supported by each portion of the cover 2 as shown in Figs. 5-9.

First, as shown in Fig. 5, according to the embodiment, for example, the ring member 4 faces the projections 21f, 21h. A wall portion 21f1 of the projection 21f faces an inner side of the ring member 4 in a radial direction. The projection 21h faces an outer side of the ring member 4 in the radial direction. Further, a wall portion 21f2 of the projection 21f faces the other side of the ring member 4 in the axial direction. The wall portion 21f1 is positioned at a base side of the projection 21f and extends towards the other side in the axial direction along the axial direction. Further, the wall portion 21f2 is connected to a tip end portion of the wall portion 21f1 and extends towards the outside in the radial direction. The projection 21f is structured in a hooked shape with the wall portion 21f1 and the wall portion 21f2. The projection 21f serves as an example of the hooked portion.

Further, as shown in Figs. 6 and 9, according to the embodiment, for example, the wall portion 21 faces the one side of the ring member 4 in the axial direction.

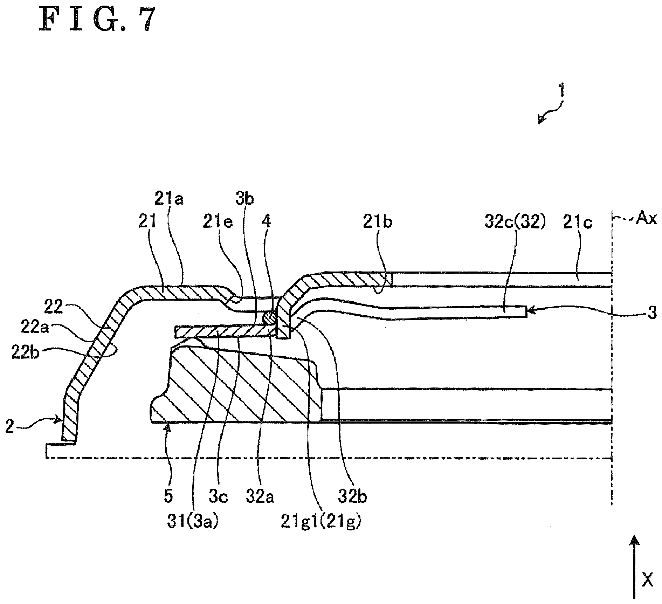

Then, as shown in Fig. 7, according to the embodiment, for example, the wall portion 21g1 of the projection 21g faces an inner side of the ring member 4 in the radial direction. The wall portion 21g1 (projection 21g) extends towards the other side in the axial direction along the axial direction.

That is, according to the embodiment, for example, as described above, the wall portion 21 faces the one side of the ring member 4 in the axial direction. The wall portion 21 serves an example of a first wall portion. Further, the wall portion 21 supports the one side (one side) of the ring member 4 in the axial direction. The wall portion 21 is an example of the first support portion. Further, the wall portions 21f1, 21g1 face the inner side of the ring member 4 in the radial direction. The wall portions 21f1, 21g1 are examples of a second wall portion. Further, the wall portion 21f2 faces the other side of the ring member 4 in the axial direction. The wall portion 21f2 is an example of a third wall portion. Further, the wall portion 21f2 is connected to the wall portion 21 via a first portion (e.g., the wall portion 21f1 according to the embodiment) positioned at least at an inner side of the ring member 4 in the radial direction and supports the other side (another side) of the ring member 4 in the axial direction. The wall portion 21f2 is an example of a second support portion. Then, the projection 21h faces the outer side of the ring member 4 in the radial direction. The projection 21h is an example of a projection portion (safety lock portion, restraining portion) that restrains the ring member 4 from moving outwardly in the radial direction. The ring member 4 is provided facing each portion of the cover 2 (wall portions 21, 21f1, 21g1, 21f2 and projection 21h), comes in contact with (contacts) each of those portions and is restrained from moving by each of those portions to be held at a predetermined position. Accordingly, the ring member 4 is supported by the cover 2.

Further, according to the embodiment, for example, as shown in Fig. 10, the ring member 4 is positioned at the side of the surface 3b (the one side in the axial direction) of the diaphragm spring 3 and is supported along the surface 3b. The ring member 4 is supported by each of the portions of the diaphragm spring 3 as shown in Figs. 5-7 and 10.

First, as shown in Fig. 5, according to the embodiment, for example, a wall portion 3g1 of the projection 3g faces the one side of the ring member 4 in the axial direction.

Further, as shown in Figs. 6, 7 and 10, according to the embodiment, for example, the wall portion 32a of the lever portion 32 faces the other side of the ring member 4 in the axial direction.

Further, according to the embodiment, for example, the wall portion 32b of the lever portion 32 faces the inner side of the ring member 4 in the radial direction.

That is, according to the embodiment, for example, as described above, the wall portion 32a faces the other side of the ring member 4 in the axial direction. The wall portion 32a is an example of a fourth wall portion. Further, the wall portion 32a supports the other side (another side) of the ring member 4 in the axial direction. The wall portion 32a is an example of a third support portion. Further, the wall portion 32b faces the inner side of the ring member 4 in the radial direction. The wall portion 32b is an example of a fifth wall portion. Then, the wall portion 3g1 faces the one side of the ring member 4 in the axial direction. The wall portion 3g1 is an example of a sixth wall portion. Further, the wall portion 3g1 is connected to the wall portion 32a via at least a second portion (e.g., the wall portion 32b according to the embodiment) that is positioned at least at the inner side of the ring member 4 in the radial direction and supports the one side (one side) of the ring member 4 in the axial direction. The wall portion 3glis an example of a fourth support portion. The ring member 4 is provided facing each of portions (wall portions 32a, 32b, 3g1) of the diaphragm spring 3, and comes in contact with (contacts) each of those portions and is restrained from being moved by each of those portions to be held at a predetermined position. Accordingly, the ring member 4 is supported by the diaphragm spring 3. Further, according to the embodiment, for example, the wall portion 21 (first support portion) and the wall portion 32a (third support portion) clamp the ring member 4 and the wall portion 21f2 (second support portion) and the wall portion 3g1 (fourth support portion) clamp the ring member 4.

According to the embodiment, for example, as described above, because of the support of the ring member 4 by the cover 2 and the diaphragm spring 3, a structure in which the cover 2 and the diaphragm spring 3 are connected to each other by means of the ring member 4 can be attained. According to the embodiment, for example, the support position of the ring member 4 by the cover 2 and the support position of the ring member 4 by the diaphragm spring 3 are at the shifted positions in a circumferential direction (different). Thus, according to the embodiment, for example, supporting the ring member 4 by the cover 2, as described above, and supporting the ring member 4 by the diaphragm spring 3 are compatible.

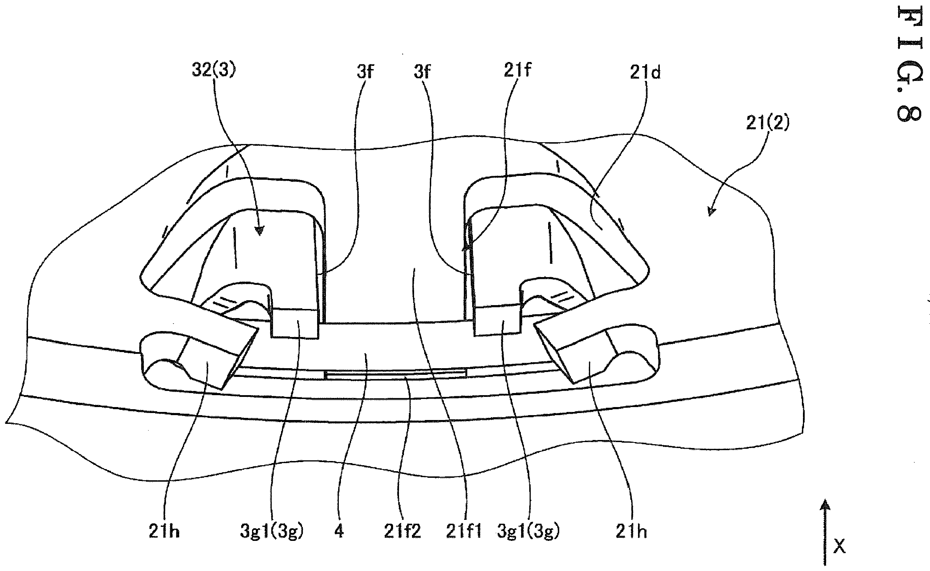

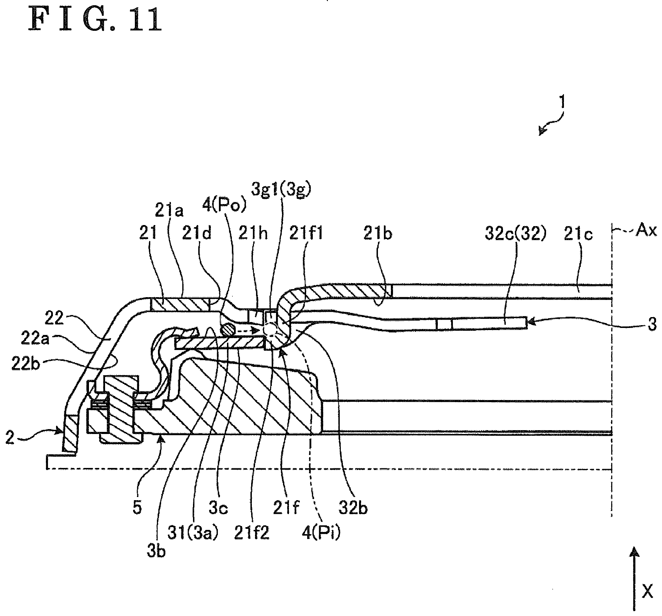

Further, when assembling the ring member 4, as shown in Fig. 11, the ring member 4 is moved from an outer side position Po in a radial direction to an inner side position Pi to be set at a predetermined position in a state where the projection 21h is positioned at the one side in the axial direction, and thereafter, as shown in Figs. 5, 8, by bending the projection 21h towards the other side in the axial direction, a state where the projection 21h faces the outer side of the ring member 4 in the radial direction can be attained. According to a conventional construction, there are cases that require a process for wrapping a part of the cover 2 onto the ring member 4 by bending the part of the cover 2 in an L-shape or a U-shape. According to the embodiment, for example, there is no need to wrap a part of the cover 2 onto the ring member 4 and a construction which restrains the ring member 4 from moving (retention structure of the ring member 4) can be attained by bending the projection 21h, which is easier compared to the wrapping. Thus, according to the embodiment, for example, time required and cost in association with assembling (manufacturing) the clutch cover assembly 1 is likely to be reduced. Further, according to the embodiment, for example, the projection 21h extends along a circumferential direction and bent in the axial direction. Thus, the position of the projection 21h in the radial direction is unlikely changed by being bent. Thus, according to the embodiment, for example, the precision in the position of the projection 21h is likely to be enhanced. In those circumstances, instead of moving the ring member 4 from the outer side to the inner side in the radial direction, the ring member 4 may be set at a predetermined position by moving in a circumferential direction. Further, the cover 2 may be provided with a projection that faces the outer side of the ring member 4 in the radial direction as a second wall portion in addition to the projection 21h.

Further, according to the embodiment, for example, as shown in Fig. 8, the projection 21f (hooked portion, second wall portion , third wall portion) provided at the cover 2 and the projection 3g (sixth wall portion) provided at the diaphragm spring 3 are adjacent to each other in the circumferential direction. With a construction in which the support position of the ring member 4 by the cover 2 and the support position of the ring member 4 by the diaphragm spring 3 are excessively far in the circumferential direction, the cover 2 and the diaphragm spring 3 are easily deformed in the axial direction by an amount of flexure (deformation) of the ring member 4. According to the embodiment, because the projection 21f and the projection 3g are adjacent to each other, as an example, the flexure of the ring member 4 is restrained and the cover 2 and the diaphragm spring 3 are unlikely displaced each other in the axial direction. Further, according to the embodiment, for example, the cover 2 and the diaphragm spring 3 are connected further firmly.

Further, according to the embodiment, for example, as shown in Figs. 4 and 10, the diaphragm spring 3 includes the lever portion 32 which is provided with the wall portion 3g1 (sixth wall portion, projection 3g) at the one side in the circumferential direction and the lever portion 32 which is provided with the wall portion 3g1 (sixth wall portion, projection 3g) at the other side in the circumferential direction. Depending on whether the projection 3g is positioned at the one side of the projection 21f (hooked portion, second wall portion, third wall portion) in the circumferential direction or the projection 3g is positioned at the other side of the projection 21f (hooked portion, second wall portion, third wall portion) in the circumferential direction, a direction (one side or the other side in the circumferential direction) of a force inputted to the ring member 4 at portions where the projection 21f and the projection 3g adjacent in response to the rotation (motion in a rocking manner) of the lever portion 32 is different. Thus, provided that the diaphragm spring 3 includes the lever portions 32 which are provided with the projections 3g at the one side in the circumferential direction only, the force in the circumferential direction that affects the ring member 4 is prone to be increased. Regarding this, according to the embodiment, for example, a force that affects the ring member 4 in a circumferential direction is reduced and a force that affects the ring member 4 in a circumferential direction is likely to be reduced compared to a case where the diaphragm spring 3 includes the lever portions 32 which are provided with the projections 3g at the one side in the circumferential direction only.

Further, according to the embodiment, for example, as shown in Fig. 8, the projection 21f (hooked portion) is adjacent to two wall portions 3g1 (sixth wall portion, projection 3g) and the projection 21f is caught by those two wall portions 3g1 (proj ection 3g) in the circumferential direction. Thus, according to the embodiment, for example, compared to a case where the wall portion 3g1 is adjacent to the one side of the projection 21f only in the circumferential direction, the cover 2 and the diaphragm spring 3 are likely to be restrained from tilting relative to the axial direction.

Further, according to the embodiment, for example, as shown in Figs. 4, 8, and 10, two wall portions 3g1 (sixth wall portion, projection 3g) adjacent to the projection 21f (hooked portion, second wall portion, third wall portion) are provided at separate lever portions 32, respectively. Thus, according to the embodiment, for example, using the slit portion 3f (see Fig. 4) between those two lever portions 32, the projection 21f is more readily disposed.

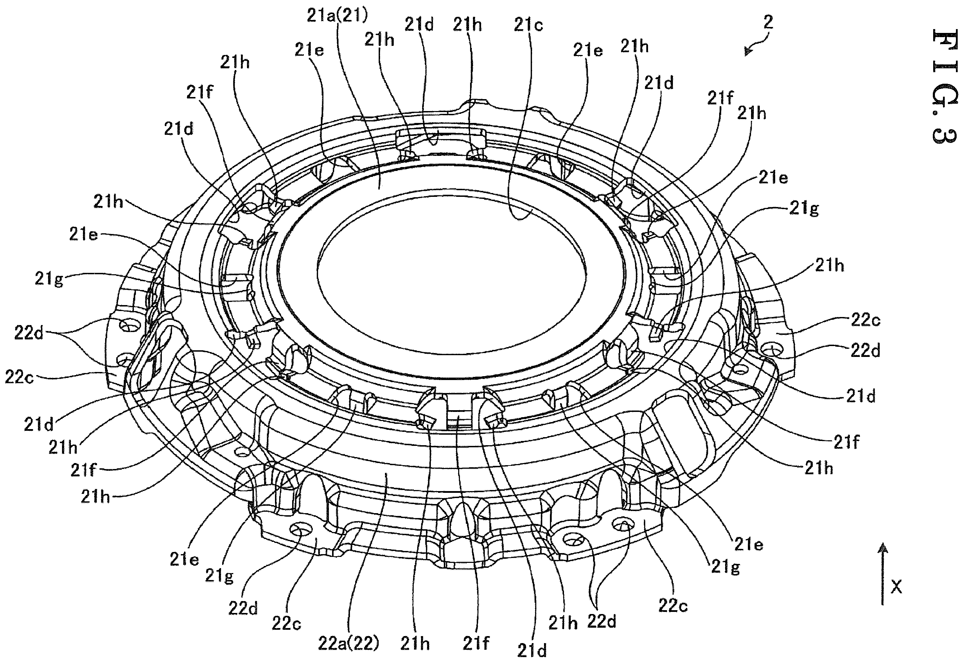

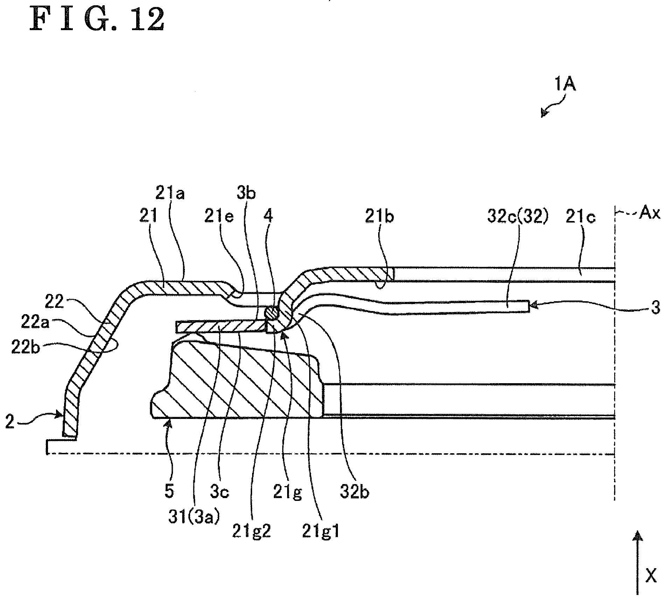

Further, according to the embodiment, for example, as shown in Fig. 3, the projection 21g (second projection portion) which is not adjacent to the wall portion 3g1 (sixth wall portion, projection 3g) is disposed at a shifted position relative to the projection 21f (first protruding portion) in the circumferential direction. Thus, according to the embodiment, for example, by providing the projection 21g between the plural projections 21f, the ring member 4 can be supported by the projection 21g between the plural projections 21f. Thus, compared to a case where the projection 21g is not provided, a configuration (e.g., roundness) of the ring member 4 is likely to be maintained with higher precision. In those circumstances, like a clutch cover assembly 1A according to a modified example shown in Fig. 12, the projection 21g may be configured as a hooked portion which includes a wall portion 21g1 and a wall portion 21g2.

As explained above, according to the embodiment, for example, the wall portion 21 (first wall portion) of the cover 2 is provided facing the one side of the ring member 4 in the axial direction. The wall portions 21f1, 21g1 (second wall portion) of the cover 2 are provided facing the inner side of the ring member 4 in the radial direction. Further, the wall portion 21f2 (third wall portion) of the cover 2 is provided facing the other side of the ring member 4 in the axial direction. Thus, according to the embodiment, for example, the ring member 4 comes to be in contact with (contacts) the wall portions 21, 21f1, 21g1, 21f2 of the cover 2 and is restrained from moving by the wall portions 21, 21f1, 21gl, 21f2 to be held at a predetermined position. On the other hand, the wall portion 32a (fourth wall portion) of the diaphragm spring 3 is provided facing the other side of the ring member 4 in the axial direction. The wall portion 32b (fifth wall portion) of the diaphragm spring 3 is provided facing the inner side of the ring member 4 in the radial direction. The wall portion 3g1 (sixth wall portion) of the diaphragm spring 3 is provided facing the one side of the ring member 4 in the axial direction. Thus, according to the embodiment, for example, the ring member 4 comes in contact with (contacts) the wall portions 32a, 32b, 3g1 of the diaphragm spring 3 and is restrained from moving by the wall portions 32a, 32b, 3g1 to be held at a predetermined position. Thus, according to the embodiment, for example, the cover 2 and the diaphragm spring 3 can be connected via the ring member 4. That is, according to the embodiment, for example, both of the cover 2 and the diaphragm spring 3 include the wall portions 21, 21f1, 21gl, 21f2, 32a, 32b, 3g1 that face the ring member 4 at the sides except the outer side in the radial direction, that is, at the one side in the axial direction, at the other side in the axial direction, and at the inner side in the radial direction. Thus, according to the embodiment, for example, the construction in which the cover 2 and the diaphragm spring 3 are connected via the ring member 4 can be relatively readily obtained without attaching the ring member 4 to the diaphragm spring 3 prior to assembling the cover 2 and the diaphragm spring 3 like the conventional construction and without partially wrapping the cover 2 onto the ring member 4. Thus, according to the embodiment, for example, the time required for manufacturing the clutch cover assembly 1 and cost are likely to be reduced.

Further, according to the embodiment, for example, the cover 2 includes the projection 21h (protruding portion) that restrains the ring member 4 from moving outward in the radial direction. Thus, according to the embodiment, for example, the ring member 4 is likely to be restrained from being disengaged to the outer side in the radial direction. Further, according to the embodiment, for example, the projection 21h (wall portion) that restrains the ring member 4 from moving outwardly in the radial direction is, according to the invention, attained by a partial deformation of the cover 2 (projection 21h) to be relatively small size so that the projection 21h is positioned to be in a state where the ring member 4 faces the outer side in the radial direction after setting the ring member 4 at a predetermined position. Thus, according to the embodiment, for example, the construction in which the ring member 4 is restrained from moving in the axial direction and the radial direction can be relatively readily obtained.

Further, according to the embodiment, for example, the cover 2 includes the projection 21f (hooked portion) that includes the wall portion 21f1 (second wall portion) and the wall portion 21f2 (third wall portion), the cover 2 is provided with an opening portion 21d (third opening portion), and the projection 21f and the projection 21h (protruding portion) protrude from a rim portion of the opening portion 21d. Thus, according to the embodiment, for example, the projection 21f and the projection 21h can be relatively readily obtained by the machining of the opening portion 21d. Further, because the wall portion 21f1 and the wall portion 21f2 are provided on the projection 21f, the time required for the manufacturing and the costs are likely to be reduced compared to a case where these are separately constructed.

Further, according to the embodiment, for example, the projection 21h extends along the circumferential direction and bent in the axial direction. Thus, the position of the projection 21h in the radial rejection is unlikely changed by bending the projection 21h. Thus, according to the embodiment, for example, the precision of the position of the projection 21h is likely to be enhanced.

### EXPLANATIONS FOR NUMERAL

1, 1A, 1B---Clutch cover assembly
2---Cover
3---Diaphragm spring
3g1---Wall portion (sixth wall portion, fourth support portion)
4---Ring member
21---Wall portion (first wall portion, first support portion)
21c---Opening portion (first opening portion)
21f---Projection (hooked portion)
21f1, 21g1---Wall portion (second wall portion, first portion)
21f2---Wall portion (third wall portion, second support portion)
21g---Projection (second protruding portion)
21h---Projection (protruding portion)
31---Base portion
32---Lever portion
32a---Wall portion (fourth wall portion, third support portion)
32b---(Fifth wall portion, second portion)

## Claims

1. A clutch cover assembly, comprising:
a ring member (4);
a cover (2) provided with a first opening portion (21c) and including a first wall portion (21) facing one side of the ring member (4) in an axial direction, a second wall portion (21f1, 21g1) facing an inner side of the ring member (4) in an radial direction, and a third wall portion (21f2) facing the other side of the ring member (4) in the axial direction, the cover (2) supporting the ring member (4); and
a diaphragm spring (3) being provided with a second opening portion (3d), at least a part of the second opening portion (3d) being overlapped with the first opening portion (21c) in the axial direction, the diaphragm spring (3) including a fourth wall portion (32a) facing the other side of the ring member (4) in the axial direction, a fifth wall portion (32b) facing the inner side of the ring member (4) in the radial direction, a sixth wall portion (3gl) facing the one side of the ring member (4) in the axial direction, an annular base portion (31) positioned at the other side of the first wall portion (21) in the axial direction and positioned at an outer side of the second opening portion (3d) in the radial direction, and a lever portion (32) protruding inwardly from the base portion (31) in the radial direction, the diaphragm spring (3) supporting the ring member (4), **characterized in that**
the cover (2) includes a protruding portion (21h), attained by a partial deformation of the cover (2), that restrains the ring member (4) from moving outwardly in the radial direction, and the protruding portion (21h) extends along a circumferential direction of the ring member (4) at an outer side of the ring member (4) in the radial direction.

2. The clutch cover assembly according to claim 1, wherein the cover (2) includes a hooked portion (21f) including the second wall portion (21f1, 21g1) and the third wall portion (21f2); the cover (2) is provided with a third opening portion (21d); and
the hooked portion (21f) and the protruding portion (21h) protrude from a rim portion of the third opening portion (21d).

3. The clutch cover assembly according to either claim 1 or claim 2, wherein the protruding portion (21h) is bent in the axial direction.

4. The clutch cover assembly according to any one of claims 1 to 3, wherein the cover (2) includes hooked portions (21f) including the second wall portion (21f1, 21gl) and the third wall portion (21f2); and
at least one of the hooked portions (21f) is provided adjacent to the sixth wall portion (3g).

5. The clutch cover assembly according to claim 4, wherein
the sixth wall portion (3g) is provided at a portion at one side or the other side of the lever portion (32) in the circumferential direction; and
the clutch cover assembly (1, 1A, 1B) includes the lever portion (32) being provided with the sixth wall portion (3g) on a portion at the one side in the circumferential direction, and the lever portion (32) being provided with the sixth wall portion (3g) on a portion at the other side in the circumferential direction.

6. The clutch cover assembly according to either claim 4 or 5, wherein at least one of the hooked portions (21f) is caught between two of the sixth wall portions (3g) in a state where being adjacent to the ring member (4) in a circumferential direction.

7. The clutch cover assembly according to claim 6, wherein two of the sixth portions that are adjacent to the hooked portion (21f) are provided at the separate lever portions (32), respectively.

8. The clutch cover assembly according to either claim 6 or 7, wherein the cover (2) includes the hooked portion (21f) being adjacent to two of the sixth wall portions (3g) and a second protruding portion (21g) including the second wall portion (21f1, 21g1) that is separated from the sixth wall portion (3g), and the hooked portion (21f) and the second protruding portion (21g) are positioned at shifted positions in a circumferential direction of the ring member (4).

9. The clutch cover assembly according to claim 1 further comprising:
a support portion supporting the one side of the ring member (4) in the axial direction and clamping the ring member (4) between the third wall portion (21f2) and the support portion.

## Patentansprüche

1. Kupplungsdeckelanordnung, mit:
einem Ringbauteil (4);
einem Deckel (2), der mit einem ersten Öffnungsabschnitt (21c) vorgesehen ist und einen ersten Wandabschnitt (21), der einer Seite des Ringbauteils (4) in einer axialen Richtung zugewandt ist, einen zweiten Wandabschnitt (21f1, 21g1), der einer Innenseite des Ringbauteils (4) in einer radialen Richtung zugewandt ist, und einen dritten Wandabschnitt (21f2), der der anderen Seite des Ringbauteils (4) in der axialen Richtung zugewandt ist, aufweist, welcher Deckel (2) das Ringbauteil (4) abstützt; und
einer Membranfeder (3), die mit einem zweiten Öffnungsabschnitt (3d) vorgesehen ist, bei der zumindest ein Teil des zweiten Öffnungsabschnitts (3d) mit dem ersten Öffnungsabschnitt (21c) in der axialen Richtung überlappt, welche Membranfeder (3) einen vierten Wandabschnitt (32a), der der anderen Seite des Ringbauteils (4) in der axialen Richtung zugewandt ist, einen fünften Wandabschnitt (32b), der der Innenseite des Ringbauteils (4) in der radialen Richtung zugewandt ist, einen sechsten Wandabschnitt (3gl), der der einen Seite des Ringbauteils (4) in der axialen Richtung zugewandt ist, einen ringförmigen Basisabschnitts (31), der auf der anderen Seite des ersten Wandabschnitts (21) in der axialen Richtung positioniert ist und auf einer Außenseite des zweiten Öffnungsabschnitts (3d) in der radialen Richtung positioniert ist, und einen Hebelabschnitt (32), der von dem Basisabschnitt (31) in der radialen Richtung nach innen vorsteht, aufweist, welche Membranfeder (3) das Ringbauteil (4) abstützt, **dadurch gekennzeichnet, dass**
der Deckel (2) einen vorstehenden Abschnitt (21h), der durch eine teilweise Verformung des Deckels (2) erhalten wird, der das Ringbauteil (4) von einer Bewegung nach außen in der radialen Richtung zurückhält, aufweist, und
sich der vorstehende Abschnitt (21h) entlang einer Umfangsrichtung des Ringbauteils (4) auf einer Außenseite des Ringbauteils (4) in der radialen Richtung erstreckt.

2. Kupplungsdeckelanordnung nach Anspruch 1, bei der der Deckel (2) einen hakenförmigen Abschnitt (21f), der den zweiten Wandabschnitt (21f1, 21g1) und den dritten Wandabschnitt (21f2) aufweist, aufweist;
der Deckel (2) mit einem dritten Öffnungsabschnitt (21d) vorgesehen ist; und
der hakenförmige Abschnitt (21f) und der vorstehende Abschnitt (21h) von einem Randabschnitt des dritten Öffnungsabschnitts (21d) vorstehen.

3. Kupplungsdeckelanordnung nach entweder Anspruch 1 oder Anspruch 2, bei der der vorstehende Abschnitt (21h) in der axialen Richtung gebogen ist.

4. Kupplungsdeckelanordnung nach einem der Ansprüche 1 bis 3, bei der der Deckel (2) hakenförmige Abschnitte (21f), die den zweiten Wandabschnitt (21f1, 21g1) und den dritten Wandabschnitt (21f2) aufweisen, aufweist; und
mindestens einer der hakenförmigen Abschnitte (21f) angrenzend an den sechsten Wandabschnitt (3g) vorgesehen ist.

5. Kupplungsdeckelanordnung nach Anspruch 4, bei der
der sechste Wandabschnitt (3g) an einem Abschnitt auf einer Seite oder der anderen Seite des Hebelabschnitts (32) in der Umfangsrichtung vorgesehen ist; und
die Kupplungsdeckelanordnung (1, 1A, 1B) den Hebelabschnitt (32), der mit dem sechsten Wandabschnitt (3g) auf einem Abschnitt auf der einen Seite in der Umfangsrichtung vorgesehen ist, und den Hebelabschnitt (32), der mit dem sechsten Wandabschnitt (3g) auf einem Abschnitt auf der anderen Seite in der Umfangsrichtung vorgesehen ist, aufweist.

6. Kupplungsdeckelanordnung nach entweder Anspruch 4 oder 5, bei der mindestens einer der hakenförmigen Abschnitte (21f) zwischen zweien der sechsten Wandabschnitte (3g) in einem Zustand gefangen ist, wo er an das Ringbauteil (4) in einer Umfangsrichtung angrenzt.

7. Kupplungsdeckelanordnung nach Anspruch 6, bei der zwei der sechsten Abschnitte, die an den hakenförmigen Abschnitt (21f) angrenzen, jeweils an den separaten Hebelabschnitten (32) vorgesehen sind.

8. Kupplungsdeckelanordnung nach entweder Anspruch 6 oder 7, bei der der Deckel (2) den hakenförmigen Abschnitt (21f), der an zwei der sechsten Wandabschnitte (3g) angrenzt, und einen zweiten vorstehenden Abschnitt (21g), der den zweiten Wandabschnitt (21f1, 21g1) aufweist, der separat von dem sechsten Wandabschnitt (3g) ist, aufweist, und der hakenförmige Abschnitt (21f) und der zweite vorstehende Abschnitt (21g) an in einer Umfangsrichtung des Ringbauteils (4) verschobenen Positionen positioniert sind.

9. Kupplungsdeckelanordnung nach Anspruch 1, ferner mit:
einem Stützabschnitt, der die eine Seite des Ringbauteils (4) in der axialen Richtung abstützt und das Ringbauteil (4) zwischen dem dritten Wandabschnitt (21f2) und dem Stützabschnitt festklemmt.

## Revendications

1. Ensemble de couvercle d'embrayage, comprenant :
un élément annulaire (4) ;
un couvercle (2) doté d'une première partie d'ouverture (21c) et incluant une première partie de paroi (21) faisant face à un côté de l'élément annulaire (4) dans une direction axiale, une deuxième partie de paroi (21f1, 21g1) faisant face à un côté intérieur de l'élément annulaire (4) dans une direction radiale, et une troisième partie de paroi (21f2) faisant face à l'autre côté de l'élément annulaire (4) dans la direction axiale, le couvercle (2) supportant l'élément annulaire (4) ; et
un ressort à diaphragme (3) étant doté d'une deuxième partie d'ouverture (3d), au moins une partie de la deuxième partie d'ouverture (3d) étant recouverte par la première partie d'ouverture (21c) dans la direction axiale, le ressort à diaphragme (3) incluant une quatrième partie de paroi (32a) faisant face à l'autre côté de l'élément annulaire (4) dans la direction axiale, une cinquième partie de paroi (32b) faisant face au côté intérieur de l'élément annulaire (4) dans la direction radiale, une sixième partie de paroi (3g1) faisant face à l'un côté de l'élément annulaire (4) dans la direction axiale, une partie de base annulaire (31) positionnée sur l'autre côté de la première partie de paroi (21) dans la direction axiale et positionnée sur un côté extérieur de la deuxième partie d'ouverture (3d) dans la direction radiale, et une partie de levier (32) faisant saillie vers l'intérieur de la partie de base (31) dans la direction radiale, le ressort à diaphragme (3) supportant l'élément annulaire (4), **caractérisé en ce que**
le couvercle (2) inclut une partie en saillie (21h), atteinte par une déformation partielle du couvercle (2) qui restreint le déplacement de l'élément annulaire (4) vers l'extérieur dans la direction radiale, et
la partie en saillie (21h) s'étend le long d'une direction circonférentielle de l'élément annulaire (4) sur un côté extérieur de l'élément annulaire (4) dans la direction radiale.

2. Ensemble de couvercle d'embrayage selon la revendication 1, dans lequel le couvercle (2) inclut une partie accrochée (21f) incluant la deuxième partie de paroi (21f1, 21g1) et la troisième partie de paroi (21f2) ;
le couvercle (2) est doté d'une troisième partie d'ouverture (21d) ; et
la partie accrochée (21f) et la partie en saillie (21h) font saillie d'une partie de bord de la troisième partie d'ouverture (21d).

3. Ensemble de couvercle d'embrayage selon la revendication 1 ou 2, dans lequel la partie en saillie (21h) est pliée dans la direction axiale.

4. Ensemble de couvercle d'embrayage selon l'une quelconque des revendications 1 à 3, dans lequel le couvercle (2) inclut des parties accrochées (21f) incluant la deuxième partie de paroi (21f1, 21g1) et la troisième partie de paroi (21f2) ; et
au moins une des parties accrochées (21f) est prévue de manière adjacente à la sixième partie de paroi (3g).

5. Ensemble de couvercle d'embrayage selon la revendication 4, dans lequel
la sixième partie de paroi (3g) est prévue sur une partie sur un côté ou l'autre côté de la partie de levier (32) dans la direction circonférentielle ; et
l'ensemble de couvercle d'embrayage (1, 1A, 1B) inclut la partie de levier (32) qui est dotée de la sixième partie de paroi (3g) sur une partie sur l'un côté dans la direction circonférentielle, et la partie de levier (32) étant dotée de la sixième partie de paroi (3g) sur une partie sur l'autre côté dans la direction circonférentielle.

6. Ensemble de couvercle d'embrayage selon la revendication 4 ou 5, dans lequel au moins une des parties accrochées (21f) est coincée entre deux des sixièmes parties de paroi (3g) dans un état où elle est adjacente à l'élément annulaire (4) dans une direction circonférentielle.

7. Ensemble de couvercle d'embrayage selon la revendication 6, dans lequel deux des sixièmes parties qui sont adjacentes à la partie accrochée (21f) sont prévues respectivement sur les parties de levier séparées (32).

8. Ensemble de couvercle d'embrayage selon la revendication 6 ou 7, dans lequel le couvercle (2) inclut une partie accrochée (21f) qui est adjacente à deux des sixièmes parties de paroi (3g) et une deuxième partie en saillie (21g) incluant la deuxième partie de paroi (21f1, 21g1) qui est séparée de la sixième partie de paroi (3g), et la partie accrochée (21f) et la deuxième partie en saillie (21g) sont positionnées dans des positions décalées dans une direction circonférentielle de l'élément annulaire (4).

9. Ensemble de couvercle d'embrayage selon la revendication 1, comprenant en outre :
une partie de support supportant l'un côté de l'élément annulaire (4) dans la direction axiale et serrant l'élément annulaire (4) entre la troisième partie de paroi (21f2) et la partie de support.
